# FASCICULE DE BREVET EUROPEEN

(11) **EP 0 841 204 B1**
(45) Date de publication et mention de la délivrance du brevet: **07.06.2000**
(21) Numéro de dépôt: 97402673.4
(22) Date de dépôt: 07.11.1997
(51) Int. Cl.: B60K 5/12, F16F 1/42, F16F 3/087

(54) **Véhicule automobile comportant un bloc motopropulseur doté d'une suspension à débattement limité**
Kraftfahrzeugmotoren mit Wegbegrenzungs- Lagereinheit
Supporting element with an oscillation limiter, particulary for an engine or an automotive vehicle

(30) Priorité: 12.11.1996 FR 9613739
(43) Date de publication de la demande: 13.05.1998
(73) Titulaire: HUTCHINSON, 75008 Paris (FR)
(72) Inventeur: Bellamy, Alain, 41100 Naveil (FR); Thierry, Pascal, 41100 Villiers S/Loir (FR)
(74) Mandataire: Burbaud, Eric

(56) Documents cités:
- EP-A- 0 142 943
- EP-A- 0 315 805
- DE-U- 8 714 888
- FR-A- 2 317 121
- US-A- 4 641 809

## Description

La présente invention est relative aux véhicules automobiles comportant un bloc motopropulseur doté d'une suspension à débattement limité.

Plus particulièrement, l'invention concerne les véhicules automobiles comportant un châssis, un bloc motopropulseur et une pluralité de dispositifs de fixation supportant le bloc motopropulseur et amortissant les mouvements vibratoires relatifs entre le bloc motopropulseur et le châssis parallèlement à un premier axe sensiblement vertical, ces dispositifs de fixation autorisant des débattements du bloc motopropulseur par rapport au châssis parallèlement au premier axe et au moins parallèlement à un deuxième axe perpendiculaire au premier axe, au moins un de ces dispositifs de fixation, dit "premier dispositif de fixation", comprenant :
- un bras de support rigide solidaire du bloc motopropulseur, le bras de support et le châssis étant appelés ci-après l'un "premier élément" et l'autre "deuxième élément",
- un support antivibratoire qui comprend lui-même une première armature rigide fixée au bras de support, une deuxième armature rigide fixée au châssis et un corps en élastomère reliant entre elles les première et deuxième armatures et supportant le bloc motopropulseur en autorisant les débattements relatifs susmentionnés entre ce bloc motopropulseur et le châssis,
- et un limiteur de débattement qui est apte à limiter les déplacements relatifs entre le bloc motopropulseur et le châssis parallèlement au deuxième axe, le limiteur de débattement comprenant un premier doigt rigide qui s'étend selon une direction perpendiculaire au deuxième axe et qui est solidaire du premier élément.

Dans les véhicules connus de ce type, par exemple dans le véhicule de marque "CLIO", construit par la Société RENAULT, le premier doigt est recouvert d'une masse de caoutchouc plein et est engagé dans un évidement du bras de support avec lequel il coopère par butée pour limiter les débattements du bloc motopropulseur, au moins parallèlement au deuxième axe.

Ce mode de réalisation connu fonctionne convenablement, mais présente l'inconvénient que, lorsque le premier doigt est en butée contre la paroi de l'évidement du bras de support, le frottement important qui est ainsi généré entre ce doigt et cette paroi gêne le fonctionnement du support antivibratoire dans le sens vertical.

En particulier, ce frottement tend à transmettre directement les mouvements vibratoires entre le bloc motopropulseur et le châssis du véhicule, alors que le support antivibratoire est précisément prévu pour éviter au maximum une telle transmission.

La présente invention a notamment pour but de pallier cet inconvénient.

A cet effet, selon l'invention, un véhicule automobile du genre en question est essentiellement caractérisé en ce que le limiteur de débattement comprend en outre :
- des deuxième et troisième doigts rigides qui s'étendent chacun selon une direction longitudinale parallèle à la direction longitudinale du premier doigt et qui sont solidaires du deuxième élément, les deuxième et troisième doigts étant compris dans deux plans perpendiculaires au deuxième axe qui sont situés de part et d'autre du premier doigt,
- et des premier et deuxième anneaux limiteurs comportant chacun un enroulement de fil résistant, flexible mais sensiblement inextensible, enrobé par une gaine en élastomère, le premier anneau limiteur étant fixé aux premier et deuxième doigts avec son enroulement de fil résistant passé autour de l'ensemble des premier et deuxième doigts, et le deuxième anneau limiteur étant fixé aux premier et troisième doigts avec son enroulement de fil résistant passé autour de l'ensemble des premier et troisième doigts.

Grâce à ces dispositions, on obtient un limiteur de débattement qui présente une relativement grande raideur parallèlement au deuxième axe, de façon à limiter efficacement les débattements du bloc motopropulseur parallèlement à cet axe, tout en présentant une très faible raideur dans la direction verticale.

Ces dispositions permettent donc au limiteur de débattement de ne pas interférer avec le fonctionnement du support antivibratoire et donc de ne pas transmettre les mouvements vibratoires entre le bloc motopropulseur et le châssis du véhicule.

De plus, les anneaux limiteurs présentent une très bonne progressivité : autrement dit, ils assurent une limitation de débattement efficace mais relativement douce, sans imposer de choc au bloc motopropulseur.

Dans des modes de réalisation préférés, on peut éventuellement avoir recours en outre à l'une et/ou à l'autre des dispositions suivantes :
- les premier et deuxième anneaux limiteurs constituent une seule pièce en élastomère armée de fil résistant;
- les enroulements de fil résistant des premier et deuxième anneaux limiteurs sont constitués par un même fil continu ;
- chaque anneau limiteur comporte des armatures rigides qui sont noyées dans sa gaine en élastomère et qui sont interposées entre l'enroulement de fil résistant de cet anneau limiteur et chacun des doigts auxquels est relié ledit anneau limiteur ;
- chaque anneau limiteur forme deux oeillets qui sont engagés avec frottement respectivement sur les deux doigts auxquels est relié ledit anneau limiteur ;
- les doigts présentent chacun une extrémité libre formant une tête élargie, les têtes élargies des trois doigts empêchant les anneaux limiteurs de se dégager desdits doigts ;
- le premier doigt est constitué par la première armature du support anvibratoire, tandis que les deuxième et troisième doigts sont solidaires du châssis du véhicule ;
- le bras de support s'étend depuis le bloc motopropulseur jusqu'à une extrémité fixée à la première armature du support antivibratoire, et ledit bras de support comporte une partie intermédiaire qui est située entre le bloc motopropulseur et ladite extrémité et qui est solidaire soit du premier doigt, soit des deuxième et troisième doigts ;
- le corps en élastomère du support antivibratoire présente une forme de cloche s'étendant en divergeant depuis un sommet solidaire de la première armature jusqu'à une base annulaire solidaire de la deuxième armature, ce corps en élastomère délimitant partiellement une chambre de travail qui communique par l'intermédiaire d'un passage étranglé avec une chambre de compensation délimitée par une paroi aisément déformable, la chambre de travail, la chambre de compensation et le passage étranglé formant un volume étanche rempli de liquide ;
- le bloc motopropulseur est à suspension pendulaire, ce bloc motopropulseur s'étendant longitudinalement selon un troisième axe horizontal perpendiculaire au deuxième axe et étant relié au châssis par le premier dispositif de fixation associé à des deuxième et troisième dispositifs de fixation, les premier et deuxième dispositifs de fixation étant sensiblement alignés parallèlement au troisième axe et étant fixés au bloc motopropulseur en des points situés au-dessus du niveau du centre de gravité de ce bloc motopropulseur, et le troisième dispositif de fixation étant relié au bloc motopropulseur en un point situé au-dessous des premier et deuxième dispositifs de fixation.

D'autres caractéristiques et avantages de l'invention apparaîtront au cours de la description détaillée suivante de plusieurs de ses formes de réalisation, données à titre d'exemples non limitatifs, en regard des dessins joints.

Sur les dessins :
- la figure 1 montre très schématiquement un moteur de véhicule automobile à suspension pendulaire, connu en soi,
- la figure 2 est une vue également très schématique d'un véhicule automobile de l'art antérieur équipé d'un moteur tel que celui de la figure 1, cette figure montrant plus en détail l'un des dispositifs de fixation du moteur,
- la figure 3 est une vue en coupe verticale d'un support antivibratoire hydraulique, connu en soi, appartenant au dispositif de fixation montré sur la figure 2,
- la figure 4 est une vue éclatée d'un dispositif de fixation pour moteur selon une forme de réalisation de l'invention, destiné à remplacer le dispositif de fixation de l'art antérieur représenté sur la figure 2,
- la figure 5 est une vue en coupe transversale d'un double anneau limiteur en élastomère appartenant au dispositif de fixation de la figure 4,
- la figure 6 est une vue en coupe selon la ligne VI-VI de la figure 5,
- la figure 7 est une vue éclatée et écorchée d'un dispositif de fixation pour moteur utilisable dans une deuxième forme de réalisation de l'invention,
- et la figure 8 est une vue schématique d'un dispositif de fixation pour moteur selon encore une autre forme de réalisation de l'invention.

Sur les différentes figures, les mêmes références désignent des éléments identiques ou similaires.

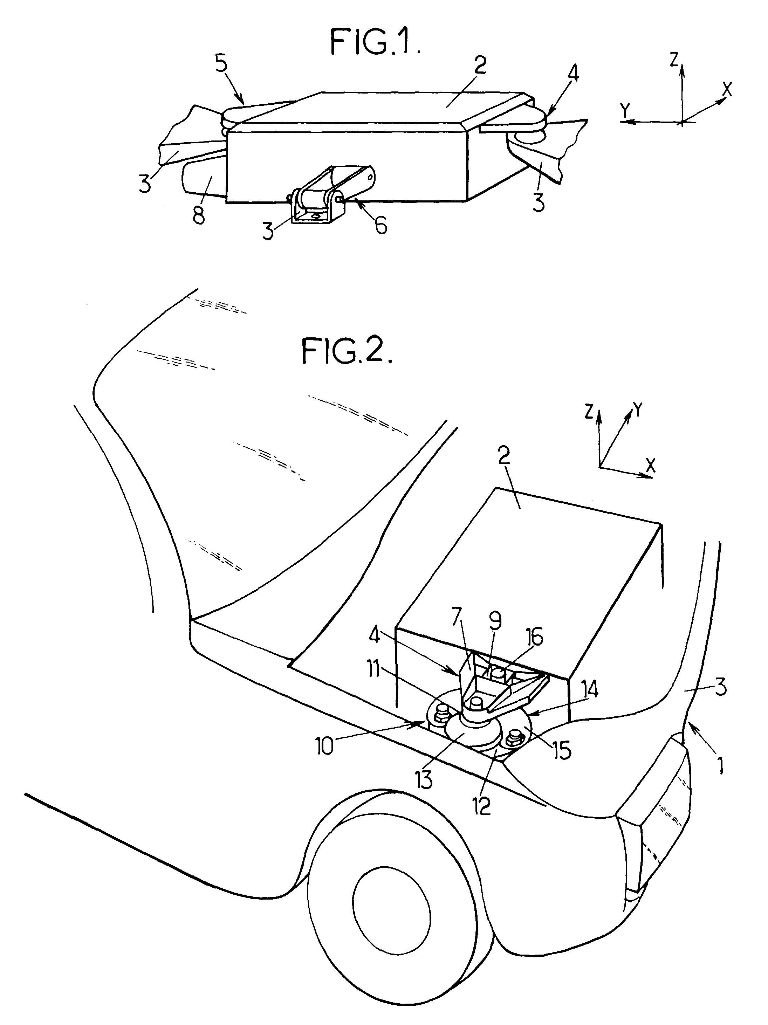

L'invention s'applique préférentiellement, mais non exclusivement, à un véhicule automobile 1 comportant un bloc motopropulseur 2 à suspension pendulaire, connu en soi et représenté sur les figures 1 et 2.

Dans une telle suspension pendulaire, la direction longitudinale du bloc motopropulseur 2 s'étend généralement parallèlement à un axe horizontal transversal Y, qui est perpendiculaire à un axe horizontal X correspondant à la direction longitudinale du véhicule.

Par ailleurs, le bloc motopropulseur 2 est généralement relié au châssis 3 du véhicule par l'intermédiaire de trois dispositifs de fixation, savoir :
- des premier et deuxième dispositifs de fixation 4, 5 alignés parallèlement à l'axe Y et fixés aux extrémités longitudinales du bloc motopropulseur en des points situés au-dessus du centre de gravité G de ce bloc motopropulseur,
- et un troisième dispositif de fixation 6 relié au bloc motopropulseur en un point situé au dessous des premier et deuxième dispositifs de fixation, par exemple sur un des côtés du bloc motopropulseur ou au dessous de ce bloc motopropulseur.

Les trois dispositifs de fixation comportent généralement des supports antivibratoires dotés chacun d'un corps en élastomère qui relie le bloc motopropulseur au châssis du véhicule, de façon à autoriser des débattements du bloc motopropulseur selon un axe vertical Z, selon l'axe X, et en rotation autour de l'axe Y (ce qui se traduit par des mouvements selon les axes X et Z).

En particulier, le bloc motopropulseur 2 se déplace en rotation autour de l'axe Y à chaque accélération et à chaque décélération.

De plus, les supports antivibratoires des premier et deuxième dispositifs de fixation 4, 5 sont également prévus, de façon connue en soi, pour supporter le poids du bloc motopropulseur 2 et pour amortir les mouvements vibratoires entre le bloc motopropulseur 2 et le châssis 3 selon l'axe Z.

Enfin, pour limiter les débattements du bloc motopropulseur 2, les dispositifs de fixation 4-6 incluent un ou plusieurs limiteurs de débattement.

Ainsi, dans l'exemple représenté sur la figure 2, correspondant à l'art antérieur, le premier dispositif de fixation 4 comprend :
- un bras de support rigide 7 sensiblement horizontal, qui est généralement réalisé en aluminium moulé ou en fonte et qui est fixé à une extrémité longitudinale du bloc motopropulseur 2, en l'occurence à l'opposé de la boîte de vitesses 8 de ce bloc motopropulseur, ce bras de support 7 étant traversé verticalement par un évidement 9 situé dans une position sensiblement médiane entre les deux extrémités dudit bras 7,
- un support antivibratoire 10 qui dans tous les cas comprend une première armature rigide 11 fixée sous le bras de support 7, une deuxième armature rigide 12 fixée au châssis 3, et un corps en élastomère 13 reliant entre elles les première et deuxième armatures et supportant le bloc motopropulseur 2 en autorisant les débattements relatifs susmentionnés entre ce bloc motopropulseur et le châssis,
- et un limiteur de débattement 14 qui est apte à limiter les déplacements relatifs entre le bloc motopropulseur 2 et le châssis 3 parallèlement à l'axe X (c'est-à-dire non seulement en translation selon l'axe X, mais également en rotation autour de l'axe Y, puisqu'une telle rotation provoque un déplacement selon les axes X et Z de tout point du bloc motopropulseur non situé sur l'axe de rotation).

Le limiteur de débattement 14 comprend d'une part une plaque de base rigide 15 horizontale en forme de fer à cheval, qui entoure partiellement le corps en élastomère 13 et qui est fixée au châssis 3, et d'autre part un doigt vertical 16 rigide recouvert de caoutchouc plein, qui est solidaire de la plaque de base 15 et qui s'étend vers le haut à partir de cette plaque de base en pénétrant dans l'évidement 9 du bras de support 7 en coopérant par butée avec les parois latérales de cet évidement.

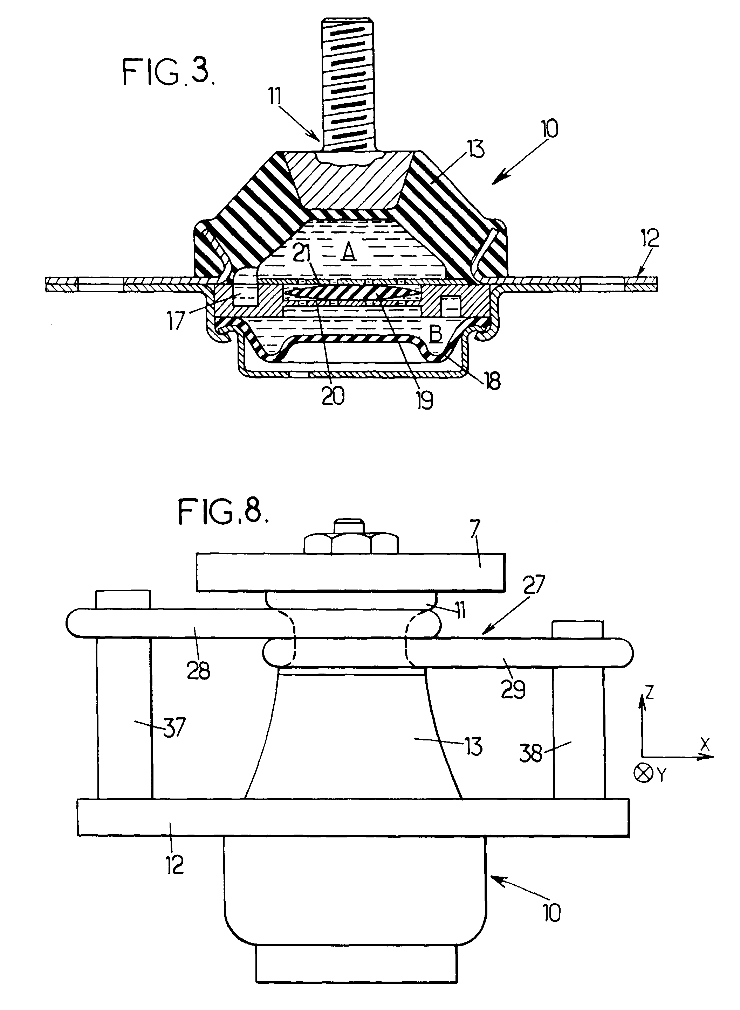

Le support antivibratoire 10 peut être hydraulique ou non. En particulier, ce support antivibratoire peut être du type de celui représenté sur la figure 3, connu du document EP-A-0 346 227, dans lequel le corps en élastomère 13 présente une forme de cloche s'étendant en divergeant depuis un sommet solidaire de la première armature 11 jusqu'à une base annulaire solidaire de la deuxième armature 12, ce corps en élastomère délimitant partiellement une chambre de travail A qui communique par l'intermédiaire d'un passage étranglé 17 avec une chambre de compensation B délimitée par un soufflet 18 en élastomère, la chambre de travail A, la chambre de compensation B et le passage étranglé 17 formant un volume étanche rempli de liquide.

Ainsi, les mouvements vibratoires entre le bloc motopropulseur 2 et le châssis 3, et en particulier les mouvements vibratoires de relativement grande amplitude (par exemple supérieure à 0,1 mm) et de relativement basse fréquence (par exemple inférieure à 20 Hz), provoquent des déplacements de liquide entre les chambres A et B par l'intermédiaire du passage étranglé 17, ce qui provoque un amortissement particulièrement efficace desdits mouvements vibratoires.

De plus, les chambres A et B sont en général séparées en partie par un clapet dit "de découplage" 19, qui peut consister par exemple en une lamelle de caoutchouc interposée entre deux grilles 20, 21, communiquant avec les chambres A, B. Ce clapet 19 absorbe les vibrations de relativement basse amplitude (par exemple, inférieure à 0,1 mm) et de relativement haute fréquence (par exemple supérieure à 20 Hz), générées par le bloc motopropulseur 2.

Le dispositif de fixation 4 de l'art antérieur qui vient d'être décrit fonctionne globalement de façon satisfaisante, notamment grâce à la remarquable efficacité du support antivibratoire hydraulique 10 qui vient d'être décrit.

Toutefois, lorsque le doigt 16 du limiteur de débattement est en butée contre la paroi de l'évidement 9 appartenant au bras de support 7, et en particulier lors des phases d'accélération ou de décélération du véhicule, le frottement important existant entre ce doigt 16 et le bras de support 4 permet aux mouvements vibratoires d'être transmis directement entre le bloc motopropulseur 2 et le châssis 3 du véhicule, sans être atténués par le support antivibratoire 10.

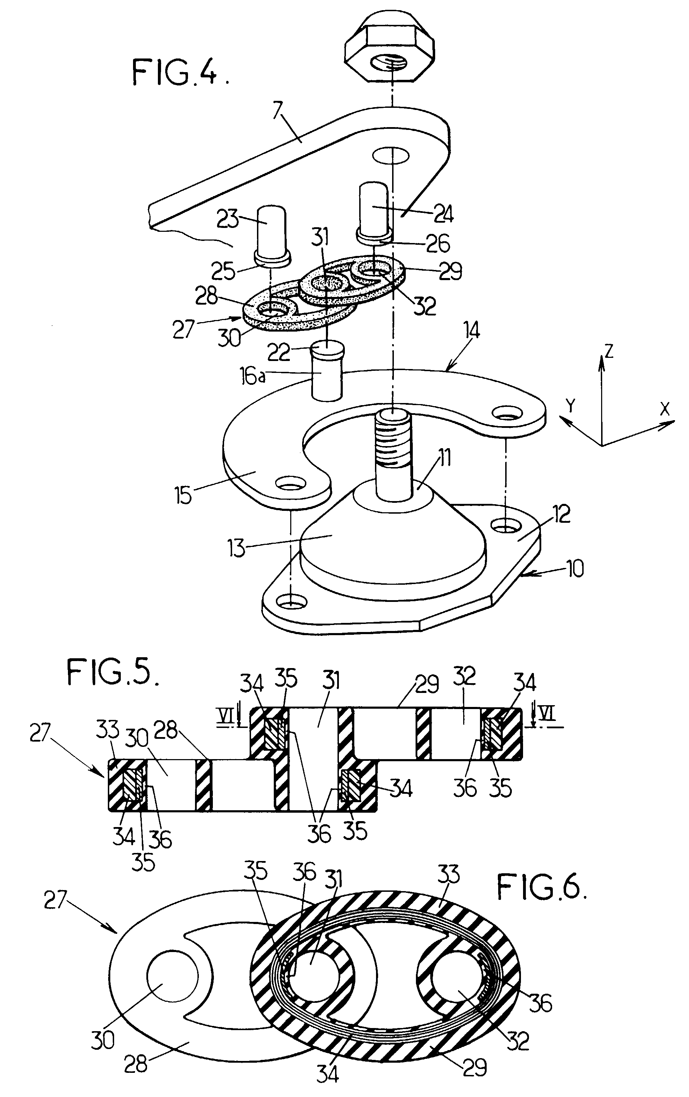

Pour pallier cet inconvénient, selon une première forme de réalisation de l'invention, on réalise le premier dispostif de fixation 4 comme représenté sur la figure 4, dans laquelle :
- le support antivibratoire 10 est identique ou similaire à celui décrit précédemment,
- le limiteur 14 comporte toujours une plaque de base 15 identique à celle décrite précédemment, mais le doigt vertical 16 est remplacé par un doigt vertical 16a plus court et présentant de préférence à son extrémité libre une tête 22 formant un léger élargissement,
- le bras de support 7 est similaire au bras déjà décrit, mais ne comporte pas l'évidement 9, ledit bras 7 comportant, en revanche, deux doigts rigides verticaux 23, 24 qui s'étendent vers le bas à partir de la face inférieure du bras 7 et qui présentent chacun de préférence une extrémité libre dotée d'une tête 25, 26 formant un léger élargissement, les trois doigts 16a, 23, 24 étant disposés dans un même plan vertical parallèle à l'axe X, et l'extrémité libre du doigt 16a étant située au-dessus des extrémités libres des doigts 23, 24,
- et le doigt 16a est relié aux doigts 23 et 24 par un double anneau limiteur 27 en élastomère constitué par des premier et deuxième anneaux limiteurs 28, 29.

Ces deux anneaux limiteurs sont situés chacun dans un plan horizontal, ou plus généralement dans un plan perpendiculaire aux doigts 16a, 25, 26.

De plus, ces anneaux limiteurs peuvent par exemple présenter chacun une forme générale ovale qui s'étend longitudinalement dans la direction de l'axe X entre deux extrémités formant chacune une oeillet qui délimite un trou, respectivement 30, 31, 32, les doigts 16a, 23, 24 étant respectivement emboîtés à force chacun dans l'un de ces trous.

Comme représenté plus en détail sur les figures 5 et 6, le double anneau limiteur 27 comporte un corps en élastomère unique 33 qui est commun aux premier et deuxième anneaux limiteurs 28, 29.

Toutefois, les deux anneaux limiteurs 28, 29 pourraient être deux pièces distinctes, sans pour autant sortir du cadre de l'invention.

De plus, le double anneau limiteur 27 est armé par un enroulement 34 de fil souple mais sensiblement inextensible (c'est-à-dire moins extensible que le caoutchouc), par exemple du fil de polyester.

Cet enroulement 34 forme deux boucles de fil, soit une première boucle comprise à l'intérieur du premier anneau limiteur 28 et passant à l'extérieur des doigts 16a et 23, et une deuxième boucle comprise à l'intérieur du deuxième anneau limiteur 29 et passant à l'extérieur des doigts 16a et 24.

Chaque boucle peut par exemple comporter environ 40 tours de fil, avec les fils de polyester les plus couramment utilisés.

De préférence, les deux boucles de fil sont réalisées avec un même fil de polyester continu.

Eventuellement, entre l'enroulement de fil 34 et chaque doigt 16a, 23, 24 peut être interposée une armature rigide 35, métallique ou en matière plastique, afin de permettre une bonne répartition des efforts entre l'enroulement de fil 34 et le corps 33 en élastomère.

Dans tous les cas, le corps en élastomère 33 comporte des parties 36 interposées entre les armatures 35 et les doigts 16a, 23, 24, afin d'obtenir une bonne progressivité dans la limitation des débattements du bloc motopropulseur, c'est-à-dire afin d'éviter que ce bloc motopropulseur ne subisse des chocs violents lors de la limitation de ses débattements.

Par ailleurs, dans le cas de figure considéré ici, la forme ovale des deux anneaux limiteurs 28, 29 participe également à cette progressivité dans la limitation des débattements.

Le double anneau limiteur 27 permet de limiter les débattements du bloc motopropulseur parallèlement à l'axe X (c'est-à-dire aussi bien en translation selon l'axe X qu'en rotation autour de l'axe Y, puisque ces rotations provoquent des mouvements du bloc motopropulseur notamment selon l'axe X) avec une relativement grande raideur élastique, mais ce double anneau limiteur présente une faible raideur élastique parallèlement à l'axe Z, ce qui lui permet de ne pas interférer avec le fonctionnement du support antivibratoire 10.

En particulier, lorsqu'on soumet le bras de support 7 à un effort parallèle à l'axe X compris entre 500 et 2 000 N., l'ensemble du dispositif de fixation 4 présente un rapport faible entre d'une part sa raideur élastique globale Kz parallèlement à l'axe Z et d'autre part sa raideur élastique globale Kx parallèlement à l'axe X, ce rapport étant généralement compris entre 0,1 et 0,15 suivant l'effort appliqué, ce qui est une valeur excellente et notablement inférieure aux valeurs obtenues avec les dispositifs de fixation de l'art antérieur tel que celui représenté sur la figure 2, où le rapport Kz/Kx était de l'ordre de 0,2.

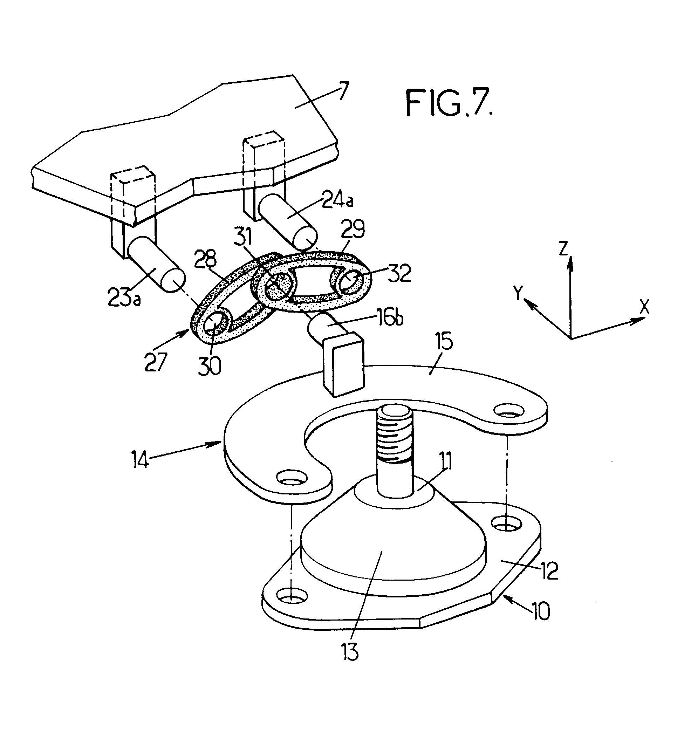

En variante, comme représenté sur la figure 7, les doigts de support 16b, 23a, 24a, qui sont engagés respectivement dans les trous 30, 31, 32 du double anneau limiteur 27 peuvent s'étendre selon l'axe Y, auquel cas les deux anneaux limiteurs 28, 29 sont compris chacun dans un plan vertical parallèle à l'axe X.

De plus, les trois doigts ne sont pas obligatoirement alignés, pourvu que les deux doigts solidaires du support 7 soient alignés parallèlement à l'axe X et compris dans des plans respectifs perpendiculaires à l'axe X et disposés de part et d'autre du doigt solidaire du châssis 3 du véhicule.

Dans un tel cas de figure, comme représenté sur la figure 7, les deux anneaux 28, 29 du double anneau limiteur 27 présentent des directions longitudinales non parallèles, faisant entre elles un angle généralement supérieur à 90 degrés.

Enfin, les trois doigts auxquels est relié le double anneau limiteur 27 pourraient faire partie de pièces différentes de celles décrites précédemment pourvu que l'un de ces doigts soit solidaire, directement ou indirectement, de l'un du bras 7 ou du châssis 3, tandis que les deux autres de ces doigts, encadrant le premier doigt, sont solidaires de l'autre du bras 7 et du châssis 3.

Par exemple, comme représenté sur la figure 8, l'un des doigts supportant le double anneau limiteur 27 pourrait être constitué par la première armature 11 du support antivibratoire 10, cette armature 11 présentant alors de préférence une gorge annulaire qui reçoit l'extrémité commune des deux anneaux limiteurs 28, 29.

Dans ce cas, les deux autres doigts autour desquels passent respectivement les premier et deuxième anneaux limiteurs 28, 29 peuvent être constitués par deux doigts verticaux rigides 37, 38, solidaires de la deuxième armature 12 du support antivibratoire 10.

Par ailleurs, dans la forme de réalisation de la figure 8 comme dans d'autres formes de réalisation, les anneaux limiteurs 28, 29 peuvent comporter un seul oeillet à leur extrémité commune, ou peuvent éventuellement ne pas comporter du tout d'oeillets délimitant des trous pour le passage des doigts supportant ces anneaux limiteurs : dans ce cas, il est préférable que chaque anneau limiteur 28, 29 soit précontraint en traction permanente entre les deux doigts auquel il est relié.

## Revendications

1. Véhicule automobile comportant un châssis (3), un bloc motopropulseur (2) et une pluralité de dispositifs de fixation (4,5,6) supportant le bloc motopropulseur (2) et amortissant les mouvements vibratoires relatifs entre le bloc motopropulseur (2) et le châssis (3) parallèlement à un premier axe (Z) sensiblement vertical, ces dispositifs de fixation (4,5,6) autorisant des débattements du bloc motopropulseur (2) par rapport au châssis (3) parallèlement au premier axe (Z) et au moins parallèlement à un deuxième axe (X) perpendiculaire au premier axe, au moins un de ces dispositifs de fixation, dit "premier dispositif de fixation" (4), comprenant :
- un bras de support (7) rigide solidaire du bloc motopropulseur (2), le bras de support (7) et le châssis (3) étant appelés ci-après l'un "premier élément" et l'autre "deuxième élément",
- un support antivibratoire (10) qui comprend lui-même une première armature rigide (11) fixée au bras de support (7), une deuxième armature rigide (12) fixée au châssis (3) et un corps en élastomère (13) reliant entre elles les première et deuxième armatures (11 et 12) et supportant le bloc motopropulseur (2) en autorisant les débattements relatifs susmentionnés entre ce bloc motopropulseur (2) et le châssis (3),
- et un limiteur de débattement (14) qui est apte à limiter les déplacements relatifs entre le bloc motopropulseur (2) et le châssis (3) parallèlement au deuxième axe (X), le limiteur de débattement comprenant un premier doigt (16a;16b;11) rigide qui s'étend selon une direction perpendiculaire au deuxième axe (X) et qui est solidaire du premier élément,
**caractérisé en ce que** le limiteur de débattement (14) comprend en outre :
- des deuxième et troisième doigts rigides (23;23a;37 et 24;24a;38) qui s'étendent chacun selon une direction longitudinale parallèle à la direction longitudinale du premier doigt (16a;16b;11) et qui sont solidaires du deuxième élément, les deuxième et troisième doigts (23;23a;37 et 24;24a;38) étant compris dans deux plans perpendiculaires au deuxième axe (X) qui sont situés de part et d'autre du premier doigt (16a;16b;11),
- et des premier et deuxième anneaux limiteurs (28 et 29) comportant chacun un enroulement (34) de fil résistant, flexible mais sensiblement inextensible, enrobé par une gaine en élastomère (33), le premier anneau limiteur (28) étant fixé aux premier et deuxième doigts (16a;16b;11 et 23;23a;37) avec son enroulement de fil résistant passé autour de l'ensemble des premier et deuxième doigts, et le deuxième anneau limiteur (29) étant fixé aux premier et troisième doigts (16a;16b;11 et 24;24a;38) avec son enroulement de fil résistant passé autour de l'ensemble des premier et troisième doigts.

2. Véhicule selon la revendication 1, dans lequel les premier et deuxième anneaux limiteurs (28 et 29) constituent une seule pièce en élastomère (27) armée de fil résistant (34).

3. Véhicule selon la revendication 2, dans lequel les enroulements de fil résistant (34) des premier et deuxième anneaux limiteurs (28 et 29) sont constitués par un même fil continu.

4. Véhicule automobile selon l'une quelconque des revendications précédentes, dans lequel chaque anneau limiteur (28,29) comporte des armatures rigides (35) qui sont noyées dans sa gaine en élastomère (33) et qui sont interposées entre l'enroulement de fil résistant (34) de cet anneau limiteur et chacun des doigts (16a,16b,23,23a, 24,24a,11,37,38) auxquels est relié ledit anneau limiteur.

5. Véhicule selon l'une quelconque des revendications précédentes, dans lequel chaque anneau limiteur (28,29) forme deux oeillets (30,31,32) qui sont engagés avec frottement respectivement sur les deux doigts (16a,16b, 23,23a,24,24a,11,37,38) auxquels est relié ledit anneau limiteur.

6. Véhicule selon la revendication 5, dans lequel les trois doigts (16a,23,24) présentent chacun une extrémité libre formant une tête élargie (22,25,26), les têtes élargies des trois doigts empêchant les anneaux limiteurs (28,29) de se dégager desdits doigts.

7. Véhicule selon l'une quelconque des revendications précédentes, dans lequel le premier doigt (11) est constitué par la première armature du support anvibratoire (10), tandis que les deuxième et troisième (37 et 38) doigts sont solidaires du châssis (3) du véhicule.

8. Véhicule selon l'une quelconque des revendications 1 à 6, dans lequel le bras de support (7) s'étend depuis le bloc motopropulseur (2) jusqu'à une extrémité fixée à la première armature (11) du support antivibratoire, et ledit bras de support comporte une partie intermédiaire qui est située entre le bloc motopropulseur et ladite extrémité et qui est solidaire soit du premier doigt (16a;16b), soit des deuxième et troisième doigts (23 et 24; 23a et 24a) (Fig.7).

9. Véhicule selon l'une quelconque des revendications précédentes, dans lequel le corps en élastomère (13) du support antivibratoire (10) présente une forme de cloche s'étendant en divergeant depuis un sommet solidaire de la première armature (11) jusqu'à une base annulaire solidaire de la deuxième armature (12), ce corps en élastomère délimitant partiellement une chambre de travail (A) qui communique par l'intermédiaire d'un passage étranglé (17) avec une chambre de compensation (B) délimitée par une paroi (18) aisément déformable, la chambre de travail, la chambre de compensation et le passage étranglé formant un volume étanche rempli de liquide.

10. Véhicule selon l'une quelconque des revendications précédentes, dans lequel le bloc motopropulseur (2) est à suspension pendulaire, ce bloc motopropulseur s'étendant longitudinalement selon un troisième axe (Y) horizontal perpendiculaire au deuxième axe (X) et étant relié au châssis (3) par le premier dispositif de fixation (4) associé à des deuxième et troisième dispositifs de fixation (5 et 6), les premier et deuxième dispositifs de fixation (4 et 5) étant sensiblement alignés parallèlement au troisième axe (Y) et étant fixés au bloc motopropulseur en des points situés au-dessus du niveau du centre de gravité (G) de ce bloc motopropulseur, et le troisième dispositif de fixation (6) étant relié au bloc motopropulseur en un point situé au-dessous des premier et deuxième dispositifs de fixation.

## Patentansprüche

1. Kraftfahrzeug, enthaltend eine Karosserie (3), einen Motorgetriebeblock (2) und eine Vielzahl von Halterungselementen (4, 5, 6), die den Motorgetriebeblock (2) haltern und die Schwingungsbewegungen zwischen dem Motorgetriebeblock (2) und der Karosserie (3) parallel zu einer im wesentlichen vertikalen ersten Achse (Z) dämpfen, wobei die Halterungselemente (4, 5, 6) Bewegungen des Motorgetriebeblocks (2) gegenüber der Karosserie (3) parallel zur ersten Achse (Z) und parallel zu wenigstens einer zweiten, zur ersten Achse senkrecht verlaufenden Achse (X) ermöglichen und wobei wenigstens eines der Halterungselemente, das im folgenden als "erstes Halterungselement" (4) bezeichnet wird, die folgenden Bestandteile umfaßt:
- einen starren, einstückig mit dem Motorgetriebeblock (2) ausgebildeten Stützarm (7), wobei der Stützarm (7) und die Karosserie (3) im folgenden als "erstes Element" bzw. "zweites Element" bezeichnet werden,
- eine schwingungsdämpfende Halterung (10), die ihrerseits eine erste steife, am Stützarm (7) befestigte Abdeckung (11), eine zweite steife, an der Karosserie (3) befestigte Abdeckung (12) sowie einen die erste und zweite Abdeckung (11 und 12) miteinander verbindenden Elastomerkörper (13) umfaßt, welcher den Motorgetriebeblock (2) in einer Weise haltert, die die genannten Relativverschiebungen zwischen dem Motorgetriebeblock (2) und der Karosserie (3) ermöglicht, und
- einen Wegbegrenzer (14), der die Relativverschiebungen zwischen dem Motorgetriebeblock (2) und der Karosserie (3) parallel zur zweiten Achse (X) begrenzt, wobei der Wegbegrenzer einen ersten steifen Zapfen (16a; 16b; 11) umfaßt, der sich in einer senkrecht zur zweiten Achse (X) verlaufenden Richtung erstreckt und einstückig mit dem ersten Element ausgebildet ist;
dadurch gekennzeichnet, daß der Wegbegrenzer (14) unter anderem die folgenden Bestandteile enthält:
- zweite und dritte steife Zapfen (23; 23a; 37 bzw. 24; 24a; 38), die sich jeweils in eine parallel zur Längsrichtung des ersten Zapfens (16a, 16b; 11) verlaufenden Längsrichtung erstrecken und einstückig mit dem zweiten Element ausgebildet sind, wobei die zweiten und dritten Zapfen (23; 23a; 37 bzw. 24; 24a; 38) in zwei senkrecht zur zweiten Achse (X) an gegenüberliegenden Seiten des ersten Zapfens (16a; 16b; 11) verlaufenden Ebenen angeordnet sind, sowie
- erste und zweite ringförmige Begrenzungselemente (28 bzw. 29), die jeweils mit einer Umwicklung aus einem widerstandsfähigen, biegsamen, aber im wesentlichen nicht dehnbaren Faden (34) versehen sind, welcher auf eine Elastomerhülle (33) aufgewickelt ist, wobei das erste ringförmige Begrenzungselement (28) am ersten und zweiten Zapfen (16a; 16b; 11 bzw. 23; 23a; 37) so befestigt ist, daß seine Umwicklung aus widerstandsfähigem Faden um die Anordnung aus erstem und zweiten Zapfen verläuft, während das zweite ringförmige Begrenzungselement (29) am ersten und dritten Zapfen (16a; 16b; 11 bzw. 24; 24a; 38) derart befestigt ist, daß seine Umwicklung aus widerstandsfähigem Faden um die Anordnung aus erstem und dritten Zapfen verläuft.

2. Kraftfahrzeug nach Anspruch 1, wobei das erste und zweite Begrenzungselement (28 bzw. 29) durch ein einziges, mit einem widerstandsfähigen Faden (34) ausgestattetes Elastomerelement (27) gebildet werden.

3. Kraftfahrzeug nach Anspruch 2, wobei die Umwicklungen aus widerstandsfähigem Faden (34) des ersten und zweiten ringförmigen Begrenzungselements (28 bzw. 29) durch denselben, fortlaufenden Faden gebildet werden.

4. Kraftfahrzeug nach einem der vorhergehenden Ansprüche, wobei jedes ringförmige Begrenzungselement (28, 29) steife Abdeckungen (35) aufweist, welche in seine Elastomerhülle (33) eingebettet sind und zwischen der Umwicklung aus widerstandsfähigem Faden (34) des ringförmigen Begrenzungselements und dem jeweiligen Zapfen (16a, 16b, 23, 23a, 24, 24a, 11, 37, 38) angeordnet sind, mit denen das betreffende ringförmige Begrenzungselement zusammenwirkt.

5. Kraftfahrzeug nach einem der vorhergehenden Ansprüche, wobei jedes ringförmige Begrenzungselement (28, 29) zwei Ösen (30, 31, 32) bildet, die jeweils mit einem der beiden Zapfen (16a, 16b, 23, 23a, 24, 24a, 11, 37, 38) in Reibeingriff stehen, mit denen das betreffende ringförmige Begrenzungselement zusammenwirkt.

6. Kraftfahrzeug nach Anspruch 5, wobei die drei Zapfen (16a, 23, 24) jeweils ein freies Ende aufweisen, das ein vergrößertes Kopfstück (22, 25, 26) bildet, wobei die vergrößerten Kopfstücke der drei Zapfen die ringförmigen Begrenzungselemente (28, 29) daran hindern, sich aus dem Eingriff mit den Zapfen zu bewegen.

7. Kraftfahrzeug nach einem der vorhergehenden Ansprüche, wobei der erste Zapfen (11) durch die erste Abdeckung der schwingungsdämpfenden Halterung (10) gebildet wird, während der zweite und dritte Zapfen (37 bzw. 38) einstückig mit der Karosserie (3) des Kraftfahrzeugs ausgebildet sind.

8. Kraftfahrzeug nach einem der Ansprüche 1 bis 6, wobei der Stützarm (7) sich über den Motorgetriebeblock (2) hinaus bis zu einem Ende erstreckt, das an der ersten Abdeckung (11) der schwingungsdämpfenden Halterung befestigt ist, und einen Mittelbereich umfaßt, der zwischen dem Motorgetriebeblock und diesem Ende angeordnet ist und entweder mit dem ersten Zapfen (16a; 16b) oder mit dem zweiten und dritten Zapfen (23 bzw. 24; 23a bzw. 24a) einstückig ausgebildet ist (siehe Fig.7).

9. Kraftfahrzeug nach einem der vorhergehenden Ansprüche, wobei der Elastomerkörper (13) der schwingungsdämpfenden Halterung (10) glockenförmig ausgebildet ist und sich von einer einstückig mit der ersten Abdeckung (11) ausgebildeten Spitze divergierend bis zu einer ringförmigen, einstückig mit der zweiten Abdeckung (12) ausgebildeten Basis erstreckt, wobei der Elastomerkörper eine Arbeitskammer (A) teilweise begrenzt, die durch einen Drosselkanal (17) mit einer Kompensationskammer (B) in Verbindung steht, welche durch eine gleichmäßig verformbare Wand (18) begrenzt wird, wobei die Arbeitskammer, die Kompensationskammer und der Drosselkanal ein abgedichtetes, mit Flüssigkeit gefülltes Volumen bilden.

10. Kraftfahrzeug nach einem der vorhergehenden Ansprüche, wobei der Motorgetriebeblock (2) eine Pendelaufhängung aufweist, sich in Längsrichtung entlang einer dritten, zur zweiten Achse (X) senkrechten horizontalen Achse (Y) erstreckt und mit der Karosserie (3) durch das erste Halterungselement (4) verbunden ist, welches mit dem zweiten und dritten Halterungselement (5 bzw. 6) zusammenwirkt, und wobei das erste und zweite Halterungselement (4 bzw. 5) im wesentlichen parallel zur dritten Achse (Y) ausgerichtet und am Motorgetriebeblock an Punkten befestigt sind, die oberhalb der Ebene des Schwerpunkts (G) des Motorgetriebeblocks liegen, während das dritte Halterungselement (6) mit dem Motorgetriebeblock an einem Punkt verbunden ist, der sich unterhalb der ersten und zweiten Halterungselemente befindet.

## Claims

1. A motor vehicle comprising a vehicle structure (3), a power unit (2), and a plurality of mounts (4, 5, 6) supporting the power unit (2) and damping relative vibratory motion between the power unit (2) and the vehicle structure (3) parallel to a substantially vertical first axis (Z), said mounts (4, 5, 6) allowing displacements of the power unit (2) relative to the vehicle structure (3) parallel to the first axis (Z) and at least parallel to a second axis (X) perpendicular to the first axis, at least one of said mounts, referred to as the "first mount" (4) comprising:
• a rigid support arm (7) secured to the power unit (2), one of the support arm (7) and the vehicle structure (3) being referred to below as the "first element" and the other being referred to as the "second element";
• an antivibration support (10) itself comprising a first rigid strength member (11) fixed to the support arm (7), a second rigid strength member (12) fixed to the vehicle structure (3), and an elastomer body (13) interconnecting the first and second strength members (11 and 12) supporting the power unit (2) while allowing the abovementioned relative displacements to take place between the power unit (2) and the vehicle structure (3); and
• a displacement limiter (14) suitable for limiting relative displacements between the power unit (2) and the vehicle structure (3) parallel to the second axis (X), the displacement limiter comprising a rigid first finger (16a; 16b; 11) which extends along a direction perpendicular to the second axis (X) and which is secured to the first element;
characterized in that the displacement limiter (14) further comprises:
• second and third rigid fingers (23; 23a; 37 and 24, 24a; 38) each extending along a longitudinal direction parallel to the longitudinal direction of the first finger (16a; 16b; 11) and secured to the second element, the second and the third fingers (23; 23a; 37 and 24; 24a; 38) lying in two planes perpendicular to the second axis (X) and situated on opposite sides of the first finger (16a; 16b; 11); and
• first and second limiting rings (28 and 29) each including a winding (34) of thread that is strong, flexible, and substantially inextensible, embedded in an elastomer sheath (33), the first limiting ring (28) being fixed to the first and second fingers (16a; 16b; 11 and 23; 23a; 37) with its winding of strong thread passing around the outsides of the first and second fingers taken together, and the second limiting ring (29) being fixed to the first and third fingers (16a; 16b; 11 and 24; 24a; 38) with its winding of strong thread passing around the outsides of the first and third fingers taken together.

2. A vehicle according to claim 1, in which the first and second limiting rings (28 and 29) constitute a single piece of elastomer (27) reinforced with strong thread (34).

3. A vehicle according to claim 2, in which the strong thread windings (34) of the first and second limiting rings (28 and 29) are constituted by a single continuous thread.

4. A motor vehicle according to any preceding claim, in which each limiting ring (28, 29) includes rigid strength members (35) which are embedded in its elastomer sheath (33) and which are interposed between the winding of strong thread (34) of said limiting ring and each of the fingers (16a, 16b, 23, 23a, 24, 24a, 11, 37, 38) around on said limiting ring is engaged.

5. A vehicle according to any preceding claim, in which each limiting ring (28, 29) forms two eyelets (30, 31, 32) which are engaged with friction on the two fingers respectively (16a, 16b, 23, 23a, 24, 24a, 11, 37, 38) to which said limiting ring is connected.

6. A vehicle according to claim 5, in which each of the three fingers (16a, 23, 24) has a free end forming an enlarged head (22, 25, 26), the enlarged heads of the three fingers presenting the limiting rings (28, 29) from coming off said fingers.

7. A vehicle according to any preceding claim, in which the first finger (11) is constituted by the first strength member of the antivibration support (10) while the second and third fingers (37 and 38) are secured to the vehicle structure (3).

8. A vehicle according to any one of claims 1 to 6, in which the support arm (7) extends from the power unit (2) to an end which is fixed to the first strength member (11) of the antivibration support, and said support arm includes an intermediate portion which is situated between the power unit and said end, and which is secured either to the first finger (16a; 16b) or else to the second and third fingers (23 and 24; 23a and 24a) (Fig. 7).

9. A vehicle according to any preceding claim, in which the elastomer body (13) of the antivibration support (10) is bell-shaped, flaring from a top secured to the first strength member (11) to an annular base secured to the second strength member (12), said elastomer body defining part of a working chamber (A) which communicates via a narrow passage (17) with a compensation chamber (B) defined by an easily deformable wall (18), the working chamber, the compensation chamber, and the narrow passage forming a sealed volume that is filled with liquid.

10. A vehicle according to any preceding claim, in which the power unit (2) has a pendulum suspension, said power unit extending longitudinally along a horizontal third axis (Y) perpendicular to the second axis (X) and is connected to the vehicle structure (3) by the first mount (4) associated with the second and third mounts (5 and 6), the first and second mounts (4 and 5) being substantially in alignment parallel to the third axis (Y) and being fixed to the power unit at points situated above the level of the center of gravity (G) of said power unit, while the third mount (6) is connected to the power unit at a point situated beneath the first and second mounts.
